# EUROPÄISCHE PATENTSCHRIFT

(11) **EP 2 718 055 B1**
(45) Veröffentlichungstag und Bekanntmachung des Hinweises auf die Patenterteilung: **08.07.2015**
(21) Anmeldenummer: 12723465.6
(22) Anmeldetag: 23.05.2012
(51) Int. Cl.: B23P 15/00, B21D 22/02, B21K 21/08, B21K 21/12

(54) **VERFAHREN ZUM HERSTELLEN EINER DROSSEL**
METHOD FOR PRODUCING A THROTTLE
PROCÉDÉ DE FABRICATION D'UN DISPOSITIF D'ÉTRANGLEMENT

(30) Priorität: 08.06.2011 DE 102011077182
(43) Veröffentlichungstag der Anmeldung: 16.04.2014
(73) Patentinhaber: Robert Bosch GmbH, 70442 Stuttgart (DE)
(72) Erfinder: DUARTE, Joao, 66424 Homburg/Saar (DE); HEINTGES, Oliver, 66424 Homburg (DE); GUELDENBERG, Rene, 66450 Bexbach (DE)
(86) Internationale Anmeldenummer: PCT/EP2012/059591
(87) Internationale Veröffentlichungsnummer: WO 2012/168076

(56) Entgegenhaltungen:
- EP-A1- 0 000 438
- DE-A1- 19 602 360
- JP-A- 2 224 844
- US-A- 4 297 774

## Beschreibung

### Stand der Technik

Die Erfindung geht aus von einem Verfahren zum Herstellen einer Drossel in einem Strömungskanal eines Bauteils, insbesondere eines Ventilstücks. Ferner geht die Erfindung aus von einer Vorrichtung zur Durchführung des Verfahrens.

Bei Ventilen, die in der Kraftfahrzeugtechnik und dort insbesondere in der Kraftstoffeinspritztechnik eingesetzt werden, dient ein innerhalb eines Ventilstücks eines Kraftstoffinjektors verlaufender Strömungskanal zum Steuern eines unter Druck stehenden Mediums, das den Strömungskanal durchströmt, der sich zwischen einem Steuerraum einer Führungsbohrung, in welcher ein Einspritzventilglied aufgenommen ist, und einem Ventilsitz des Ventilstücks erstreckt. Um auch bei niedrigem Druck im Steuerraum einen stabilen Durchfluß durch das Ventil und mithin ein genau definiertes, kontrollierbares Einspritzverhalten zu erzielen, wird der Strömungsquerschnitt im Strömungskanal mittels einer im zuströmseitigen Eingangsbereich des Strömungskanals ausgebildeten Drossel, welche auch als Ablaufdrossel bezeichnet wird, gezielt verengt.

Aus der US 4297774 sind ein Verfahren und eine Vorrichtung bekannt, bei denen ein Durchlass in einer Düse verkleinert und mit spiralförmigen Nuten versehen werden kann.

Aus der DE 25 01 465 ist ein Verfahren zum Prägen, Verzieren und Formen von Halbzeug bekannt. Dabei wird das Halbzeug mittels eines Formwerkzeugs geformt, während mittels eines entsprechend ausgebildeten Gegenstempels die Prägung durchgeführt wird. Alternativ wird die Prägung bei Verwendung von Negativ-Formwerkzeug mittels eines Prägestempels durchgeführt. Nachteilig dabei ist, dass dieses Verfahren lediglich zum Prägen von Folien auf einem Trägermaterial geeignet ist und somit nur ein begrenztes Anwendungsspektrum aufweist.

Bei herkömmlichen, bekannten Ventilen, insbesondere solchen zur Verwendung in Kraftstoffeinspritzsystemen, wird die Ablaufdrossel, welche sich zwischen dem Steuerraum und einem als Schließelement ausgebildeten Trichter des Ventils erstreckt, beispielsweise durch einen Prägeprozess und einen daran anschließenden Erodierprozess hergestellt, wodurch die Drosselgeometrie erzeugt wird. Wenn dabei die jeweiligen Prozessachsen beider Prozesse nicht koaxial zueinander verlaufen, sondern die beiden prozessbestimmenden Achsen beispielsweise aufgrund einer Fehlorientierung einen Versatz aufweisen, indem z.B. der Erodiervorgang gegenüber dem Prägevorgang eine Exzentrizität aufweist, so tritt eine Diskrepanz zwischen der Prägegeometrie und der Erodiergeometrie in der dabei erzeugten Drossel auf, wodurch die effektive Länge der Drossel beeinflusst bzw. verkürzt wird und somit die Durchflusseigenschaften der Drossel in dem Ventilstück beeinflusst werden. Dies kann zu einer verminderten Kävitationssicherheit der auf diese Weise hergestellten Drossel führen. Der Durchfluss durch eine nicht sicher Kavitation erzeugende Drossel würde auf unterschiedliche Differenzdrücke vor und nach der Drossel mit Volumenstromänderungen reagieren, welches die Mengensteuerung erschwert. Ferner kann es vorkommen, dass beim Prägevorgang ein dabei auftretender axial versetzt liegender Restquerschnitt der Drosselkontur, d.h. der nach dem Prägevorgang offen bleibende engste Querschnitt, nicht vollständig durch den Erodiervorgang entfernbar ist. Zusammen mit der Erodierkontur kann sich dadurch ein zu großer Querschnitt für das im bestimmungsgemäßen Betrieb des Ventilstücks durchströmende Medium ergeben.

### Vorteile der Erfindung

Das Verfahren mit den Merkmalen des Patentanspruchs 1 hat den Vorteil, dass der Prägevorgang, d.h. die plastische Verformung des Materials im Ventilstück durch einen Prägestempel in der Nähe der geplanten Drossel gleichzeitig mit der Konturierung der Drossel mittels eines Gegenstempels in einem Arbeitsgang erfolgt, wobei sich das von dem Prägestempel plastisch verformte Material an.die Kontur des im Strömungskanal eingesetzten Gegenstempels anlegt und dadurch die Drosselkontur im Strömungskanal erzeugt wird, womit sichergestellt wird, dass die gesamte Drosselgeometrie über den Gegenstempel in einem Arbeitsgang definiert wird. Asymmetrien in der Drosselkontur, wie sie bei Herstellungsverfahren mit verschiedenen Arbeitsgängen für die Konturbildung der Drossel auftreten können und welche zu einer Veränderung der Drossellänge führen können, werden durch das erfindungsgemäße Herstellungsverfahren weitgehend vermieden, da hier die Drossellänge im wesentlichen durch die Position des konturbildenden Bereichs des Gegenstempels in dem Strömungskanal des Ventilstücks definiert wird. Da ferner beim erfindungsgemäßen Verfahren die gesamte Drosselgeometrie in einem Arbeitsschritt erzeugt wird, entfällt hier der beim herkömmlichen Herstellungsverfahren ansonsten erforderliche Fertigungsschritt des Erodierens der Drosselkontur, so dass der erfindungsgemäße Herstellungsprozess mit demgegenüber niedrigeren Fertigungskosten prinzipiell durchführbar ist.

Weitere vorteilhafte Weiterbildungen und Ausgestaltungen der Erfindung ergeben sich durch die in den Unteransprüchen aufgeführten Maßnahmen.

### Zeichnungen

Anhand der beigefügten Zeichnungen soll nachstehend eine Ausführungsform der Erfindung erläutert werden. In schematischen Ansichten zeigen:
Fig. 1 eine Schnittansicht einer zur Durchführung des erfindungsgemäßen Verfahrens vorgesehenen Prägeeinrichtung mit einem darin aufgenommenen Ventilstück,
Fig. 2 eine Teilansicht der Prägeeinrichtung von Fig. 1 im Schnitt,
Fig. 3 eine Teilansicht der Prägeeinrichtung gemäß Fig. 1 mit in einer Führungsbohrung des Ventilstücks eingetauchtem Prägestempel im Schnitt,
Fig. 4 eine Teilansicht eines Grundkörpers der Prägeeinrichtung im Bereich des Anschlussstutzens mit aufgesetzter Aufnahmehülse und koaxial zur Längemittelachse der Prägeeinrichtung ausgerichtetem Prägestempel im Schnitt,
Fig. 5 eine Teilansicht eines Ventilstücks in einem Verfahrensstadium zum Einstellen einer Prägetiefe,
Fig. 6 eine Teilansicht der Prägeeinrichtung im Bereich der Aufnahmehülse mit darin eingesetztem Gegenstempel in Schnittdarstellung,
Fig. 7A einen zum Einbau in die Prägeeinrichtung vorgesehenen Gegenstempel in Schnittdarstellung,
Fig. 7B eine Ausschnittvergrößerung des Gegenstempels gemäß Einzelheit A in Fig. 7A,
Fig. 7C eine Ausschnittvergrößerung des Gegenstempels gemäß Einzelheit B in Fig. 7B,
Fig. 8 den Prägestempel zur Verwendung in der Prägeeinrichtung von Fig. 1 in Schnittdarstellung,
Fig. 9 den Grundkörper der Prägeeinrichtung im Schnitt,
Fig. 10 die Aufnahmehülse der Prägeeinrichtung im Schnitt,
Fig. 11 einen zur Lagerung des Gegenstempels in der Prägeeinrichtung vorgesehenen Federsitz im Schnitt, und
Fig. 12 ein Flussdiagramm mit den wesentlichen Verfahrensschritten des erfindungsgemäßen Prägeverfahrens.

### Beschreibung des Ausführungsbeispiels

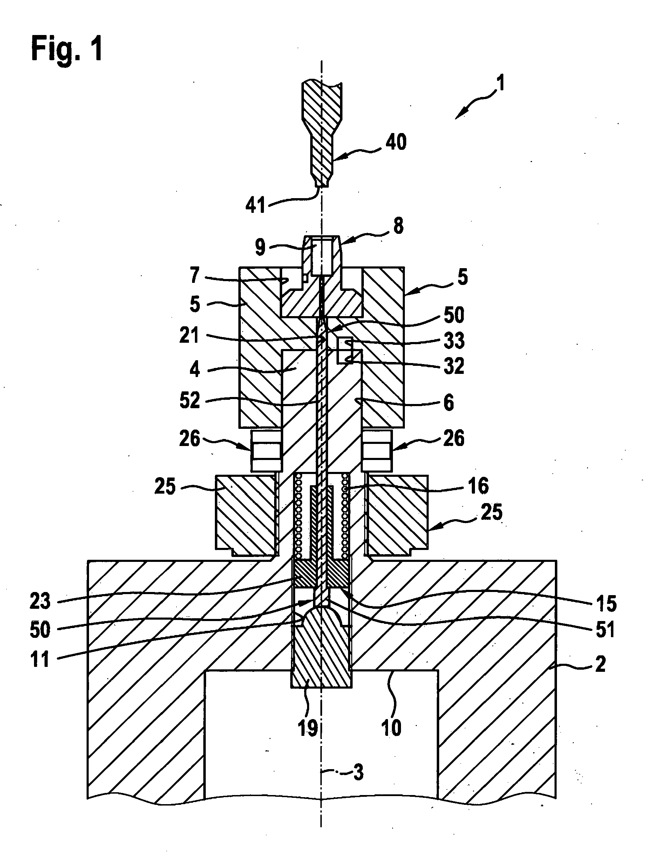

Fig. 1 zeigt eine zur Durchführung des erfindungsgemäßen Verfahrens vorgesehene und im Ganzen mit 1 bezeichnete Prägeeinrichtung, welche einen Grundkörper 2 mit einem koaxial mit der Längsmittelachse 3 der Prägeeinrichtung 1 halsförmig nach oben vorstehenden Anschlussstutzen 4 aufweist, auf dem eine im Schnitt H-förmige Aufnahmehülse 5 mit ihrer unteren Aufnahmebohrung 6 aufgesteckt ist und einen Kopfteil der Vorrichtung bildet, während ihre koaxial dazu angeordnete obere Aufnahmebohrung 7 zur Aufnahme eines zu bearbeitenden Bauteils 8 dient.

Bei dem Bauteil handelt es sich um ein Ventilstück 8 eines Kraftstoffinjektors; in einem derartigen Ventilstück 8 wird in einem spanabhebenden Bearbeitungsschritt ein Strömungskanal bzw. Ablaufkanal 24 ausgebildet, der in Durchströmungsrichtung eingangsseitig zwischen einem bodenseitig in einer Führungsbohrung des Ventilstücks angeordneten Steuerraum und ausgangsseitig einem Ventilsitz verläuft, wobei der Ventilsitz trichterförmig ausgeformt ist, um ein Schließelement zum Öffnen und Schließen des Strömungskanals aufzunehmen. Das Ventilstück 8 ist so in der Aufnahmebohrung 7 der Aufnahmehülse 5 aufgenommen, dass die Führungsbohrung 9 des Ventilstücks 8 nach oben entlang der Längsmittelachse 3 ausgerichtet ist, so dass zum Prägen ein entlang der Längsmittelachse bzw. Symmetrieachse 3 der Prägeeinrichtung 1 ausgerichteter Prägestempel 40 in die Führungsbohrung 9 eingeführt werden kann. Ausgehend von der Unterseite 10 der Prägeeinrichtung 1 durchsetzt entlang der Längsmittelachse 3 eine als Stufenbohrung ausgeführte Aufnahmebohrung 11 den Grundkörper 2 und den halsförmigen Anschlussstutzen 4, wobei der Innendurchmesser der Stufenbohrung 11 in ihrem oberen Abschnitt wesentlich kleiner als im unteren Abschnitt ist.

Die Aufnahmebohrung 11 dient zur Aufnahme eines Gegenstempels 50, welcher im unteren, durchmessergrößeren Abschnitt der Aufnahmebohrung 11 so gelagert ist, dass dessen kopfseitig verdicktes und nach unten weisendes Ende 51 sich an einer am unteren Ende der Aufnahmebohrung 11 sitzenden Kugeldruckschraube 19 abstützt und sein sich vom kopfseitigen Ende 51 nach oben forterstreckender Schaft 52 einen innerhalb des durchmessergrößeren Bereichs der Aufnahmebohrung 11 axial verschieblich aufgenommenen hülsenförmigen Federsitz 15 durchsetzt. Dabei weist der Federsitz 15 eine längsaxiale Durchgangsbohrung 17 auf mit einem an den Außendurchmesser des Schafts 52 des Gegenstempels 50 angepassten Innendurchmesser, um ein axiales Spiel des Schafts in der Durchgangsbohrung zuzulassen. In Einbaulage umgreift eine Druckfeder 16 einen hülsenförmigen Fortsatz 18 des Federsitzes 15, wobei das obere Ende der Druckfeder 16 an der Absatzstufe 12 zum durchmesserkleineren Abschnitt der Aufnahmebohrung 11 anliegt und das nach unten weisende Ende der Druckfeder 16 an einem am unteren Ende des Fortsatzes 18 radial vorstehenden und umlaufenden Kragen 23 des Federsitzes 15 aufliegt; dadurch kommt der Kragen 23 des Federsitzes 15 in Anschlag zu dem Kopf 51 des Gegenstempels 50 und presst diesen gegen die Kugeldruckschraube 19. Der im durchmessergrößeren Abschnitt der Aufnahmebohrung 11 im Federsitz 15 gelagerte Gegenstempel 50 durchsetzt den durchmesserkleineren Abschnitt der Aufnahmebohrung 11 und eine koaxial dazu in der aufgesteckten Aufnahmehülse 5 verlaufende Durchgangsbohrung 21 so, dass die Spitze des Gegenstempels 50 in die Kanalbohrung 24 des in der Aufnahmehülse 5 eingesetzten Ventilstücks 8 hineinragt. Indem die Kugeldruckschraube 19 innerhalb eines im unteren Öffnungsbereich der Aufnahmebohrung 11 ausgebildeten Gewindes 13 höhenverstellbar ist, lässt sich damit die axiale Lage des Gegenstempels 50 innerhalb der Prägeeinrichtung 1 und somit die Höhenposition der Spitze 58 des Gegenstempels 50 in axialer Richtung einstellen.

Im unteren Außenabschnitt des Anschlussstutzens 4 umschließt eine Rändelmutter 25 den dort an seinem Außenumfang mit einem Gewindegang 20 versehenen Anschlussstutzen 4, wobei zwischen der Rändelmutter 25 und der darüber sitzenden Aufnahmehülse 5 ein Zylinderrollenlager 26 angeordnet ist. Dadurch kann durch Hochdrehen der Rändelmutter 25 aus ihrer unteren Anschlagstellung die Aufnahmehülse 5 von dem Anschlussstutzen 4 gelöst werden.

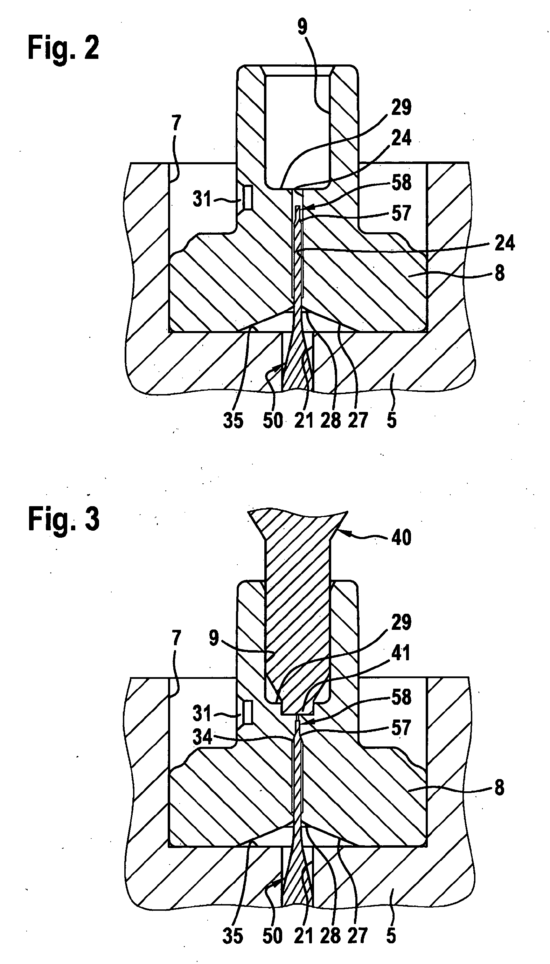

Fig. 2 zeigt eine Ausschnittvergrößerung der Prägeeinrichtung 1 im oberen Bereich der im Schnitt H-förmigen Aufnahmehülse 5. Die Aufnahmehülse 5 weist die Durchgangsbohrung 21 auf, die entlang der Längsmittelachse 3 koaxial zu den beiden Aufnahmebohrungen 6, 7 verläuft, jedoch einen gegenüber den beiden Aufnahmebohrungen 6, 7 deutlich verringerten Innendurchmesser aufweist und mit der am oberen Ende des Anschlussstutzens 4 ausmündenden Aufnahmebohrung 11 korrespondiert. Der im unteren Bereich des Grundkörpers 2 an seinem kopfseitigen Ende 51 mittels des Federsitzes 15 im unteren Segment der Aufnahmebohrung 11 gelagerte Schaft 52 des Gegenstempels 50 erstreckt sich entlang der Längsmittelachse 3 der Prägeeinrichtung 1, durchgreift die Durchgangsbohrung 21 und ragt mit seinem Spitzenabschnitt 53 in die obere Aufnahmebohrung 7 hinein. In der oberen Aufnahmebohrung 7 wird als Bauteil das Ventilstück 8 eines Kraftstoffinjektors zentriert eingesetzt, wobei der zu einem Trichter 27 ausgebildete Ventilsitz 28 des Ventilstücks 8 dem Boden 35 der Aufnahmebohrung 7 zugewandt ist und der im Ventilstück 8 zwischen dem Ventilsitz 28 und der Führungsbohrung 9 zentral verlaufende Kanal 24 mit der Längsmittelachse bzw. Symmetrieachse 3 der Prägeeinrichtung 1 fluchtet, so dass sich der aus der Durchgangsbohrung 21 in die Aufnahmebohrung 7 der Aufnahmehülse 5 hineinragende Spitzenabschnitt 57, 58 des Gegenstempels 50 in diesen Kanal 24 axial erstreckt und der Spitzenabschnitt 57, 58 an der projektierten Drosselstelle im Kanal 24 mit einem axialen Abstand vor dem Boden 29 der Führungsbohrung 9 positioniert ist. Dabei ist der in den Kanal 24 hineinragende Abschnitt 55 des Gegenstempels 50 derart ausgebildet, dass der Außendurchmesser des Abschnitts 55 an den Innendurchmesser des Kanals 24 angepasst ist. Eine seitlich an dem Ventilstück 8 angebrachte Ansenkung 31 dient in einem später erfolgenden Verfährensstadium dazu eine Zulaufdrossel in den Steuerraum auszubilden.

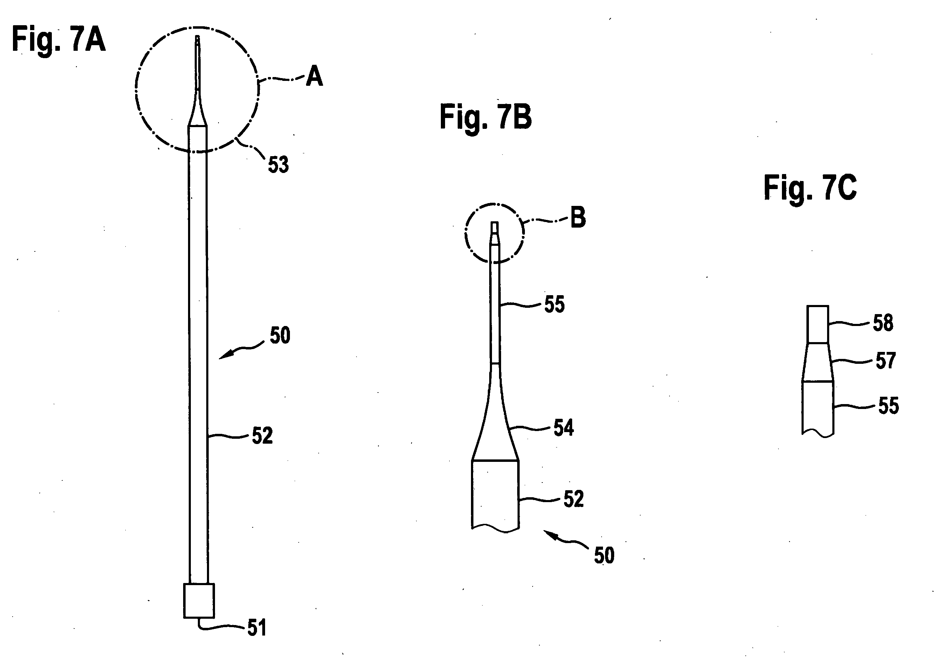

Fig. 3 zeigt ein in die,Aufnahmehülse 5 der Prägeeinrichtung 1 eingesetztes Ventilstück 8. Der in die Führungsbohrung 9 des Ventilstücks 8 eingetauchte Prägestempel 40, der mittels einer nicht dargestellten, schlittenartigen Kraft- und Wegsteuerungseinrichtung längsaxial d.h. entlang der Längsmittelachse 3 bewegt wird, verformt dabei in Abhängigkeit von der eingestellten Kraft und dem eingestellten Weg mit seinem stirnseitig ausgebildeten Prägekopf 41 das Material am Boden 29 der Führungsbohrung 9, durch welchen sich der Kanal 24 zum Ventilsitz 28 hin erstreckt, wodurch das Material, bei dem es sich um Bulk-Material des Ventilstücks handelt, im Bereich des Kanals bzw. der Kanalbohrung 24 gestaucht wird und sich dort insbesondere an den im oberen Bereich der Kanalbohrung 24 befindlichen Spitzenabschnitt 57, 58 des Gegenstempels 50 anlegt. Dabei wird die Topographie, d.h. die geometrische Kontur des Spitzenabschnitts 57, 58 des Gegenstempels 50, wie dies in Fig. 7A, 7B, 7C veranschaulicht ist, auf den den Spitzenabschnitt 57, 58 umschließenden Bereich der Kanalbohrung 24 abgebildet und somit eine Drossel ausgebildet. Die der Drossel zugrundeliegende Drosselkontur weist somit eine Gegenkontur auf, die während des Prägevorgangs der geometrischen Kontur des Spitzenabschnitts 57, 58 des Gegenstempels 50 komplementär zugeordnet ist.

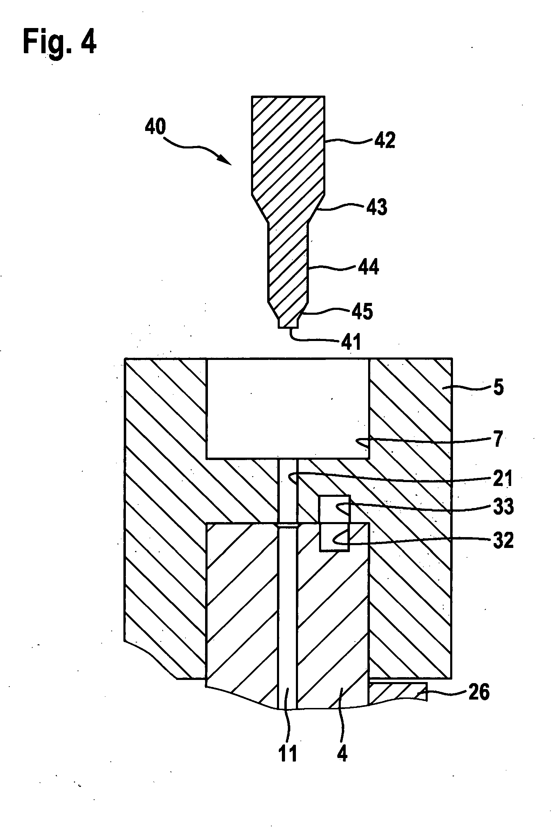

Fig. 4 zeigt in einer Ausschnittvergrößerung die auf den Anschlussstutzen 4 aufgesetzte Aufnahmehülse 5 in einem Verfahrensstadium zum Einrichten des Prägeweges. Dazu wird der Prägestempel 40 relativ zur Prägeeinrichtung 1 derart ausgerichtet, dass dessen Längsmittelachse 46 koaxial zur Längsmittelachse 3 der Prägeeinrichtung 1 und damit zur Durchgangsbohrung 21 verläuft, d.h. die Längsmittelachse 46 des Prägestempels 40 und die Längsmittelachse 3 der Durchgangsbohrung 21 in der Prägeeinrichtung 1 und der daran befestigten Aufnahmehülse 5 sind fluchtend zueinander ausgerichtet. Für diese Prozedur sind in der Prägeeinrichtung 1 weder der Gegenstempel noch das Ventilstück eingesetzt. Um ein unerwünschtes Verdrehen der Aufnahmehülse 5 relativ zum Anschlussstutzen 4 der Prägeeinrichtung 1 während des Aushebens des Ventilstücks mittels Hochdrehen der Rändelmutter zu vermeiden, ist am oberen Ende des Anschlussstutzens 4 außermittig zur Ausmündung der Durchgangsbohrung 21 eine Sacklochbohrung 32 vorgesehen, die bei bestimmungsgemäß auf dem Anschlussstutzen 4 aufgesteckter Aufnahmehülse 5 mit einer zugeordneten Sacklochbohrung 33 korrespondiert, welche in der Aufnahmehülse 5 außermittig zu deren Durchgangsbohrung 21 angeordnet ist, so dass ein beim Zusammenbau der beiden Bauteile 4, 5 in diese gegenüberliegenden Sacklochbohrungen 32, 33 eingesetzter Stift eine drehfeste Verankerung beider Bauteile 4, 5 sicherstellt.

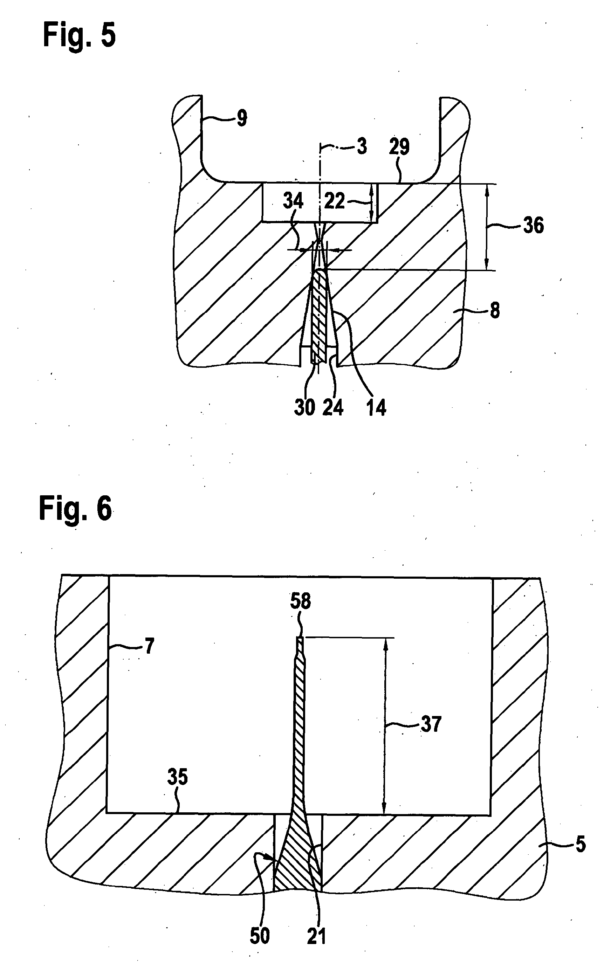

Fig. 5 zeigt eine im Schnitt gehaltene Teilansicht eines in der Prägeeinrichtung 1 eingesetzten Ventilstücks 8 in einer weiteren Verfahrensstufe zur Einstellung eines Prägeweges. In dieser Verfahrensstufe taucht der Prägestempel 40 in längsaxialer Richtung in die Führungsbohrung 9 des Ventilstücks 8 ein, bis der Prägekopf 41 mit einer vorbestimmten Antastkraft, die im bevorzugten Ausführungsbeispiel etwa 200 N beträgt, am Boden 29 des Ventilstücks 8 in Anschlag kommt. In dieser Stellung wird die Start- bzw. Nullposition für den Prägeweg festgelegt. Ausgehend von dieser Startposition wird der Prägekopf 41 nach Maßgabe einer voreingestellten Prägekraft in den Boden 29 der Führungsbohrung 9 hinein bewegt, wobei der Prägekopf 41 das Material im Bereich des Bodens 29 der Führungsbohrung 9 derart plastisch verformt bzw. staucht, dass sich dort eine Vertiefung 22 ausbildet. Diese Vertiefung 22 im Boden 29 der Führungsbohrung 9 stellt in axialer Richtung einen Prägeweg dar, den der Prägekopf 41 des Prägestempels 40 während der plastischen Materialverformung des Ventilstücks 8 zurücklegt. Die Voreinstellung des Prägeweges 22 erfolgt dabei, ohne dass ein Gegenstempel in den Kanal 24 des Ventilstücks 8 eingesetzt ist. Aufgrund der Stauchung wird der an die Vertiefung 22 angrenzende Abschnitt der Kanalbohrung 24 in seinem Querschnitt verengt. Mit zunehmender axialer Distanz zu dem querschnittsverengten Abschnitt 34 erweitert sich die Querschnittsverengung zu einem kegelförmigen Abschnitt 14, um schließlich in den von der Stauchung im Wesentlichen unbeeinflussten Teil der Kanalbohrung 24 zu münden. Um die Kegeltiefe 36, d.h. die axiale Lage und den radialen Durchmesser der Querschnittsverengung 34 innerhalb des Kanals 24 zu überprüfen, wird ein geeigneter Messtaster 30 von der Unterseite 10 der Prägeeinrichtung 1 in den Kanal 24 eingeführt und dessen Anschlagposition in dem Kegelabschnitt 14 ermittelt.

Fig. 6 zeigt in einer daran anschließenden Verfahrensstufe den nach der Einstellung des Prägeweges 22 in die Aufnahmehülse 5 der Prägeeinrichtung 1 eingebauten Gegeristempel 50. Dazu ist die Rändelmutter 25 so eingestellt, dass sie sich in ihrer unteren Anschlagstellung an dem Anschlussstutzen 4 befindet. Mittels der Kugeldruckschraube 19 wird die axiale Lage des Gegenstempels 50 innerhalb der Prägeeinrichtung 1 auf eine vorbestimmte Höhe eingestellt, d.h. der axiale Überstand 37 des in die obere Aufnahmebohrung der Aufnahmehülse 4 hineinragenden Spitzenäbschnitts 57, 58 gegenüber dem Boden 35 der oberen Aufnahmebohrung 7 wird eingestellt.

Fig. 7A, 7B, 7C zeigen die Topographie des Gegenstempels 50. Wie Fig. 7A zeigt, erstreckt sich von dem kopfseitigen Ende 51, das bei bestimmungsgemäßen Einbau in die Prägeeinrichtung 1 zum Abstützen auf der Kugeldruckschraube 19 vorgesehen ist, in axialer Richtung ein länglicher Schaft 52, der in einen Spitzenbereich 53 übergeht, wobei der Spitzenbereich 53 das zum kopfseitigen Ende 51 entgegengesetzte Ende bildet und eine topographisch ausgebildete Kontur aufweist. Bei bestimmungsgemäßem Einbau in die Prägeeinrichtung 1 durchsetzt der Schaft 52 den oberen, durchmesserkleineren Abschnitt der Aufnahmebohrung 11 des Grundkörpers 2 und die angrenzende Durchgangsbohrung 21 der auf den Anschlussstutzen 4 aufgesetzten Aufnahmehülse 5, wobei der gegenüber dem Schaft 52 verjüngte Spitzenbereich 53 aus der oberen Aufnahmebohrung 7 der Aufnahmehülse 5 in die Kanalbohrung 24 des Ventilstücks 8 hineinragt. In Fig. 7B ist veranschaulicht, wie der Schaft 52 über einen sich konusförmig verjüngenden Abschnitt 54 in einen im Durchmesser deutlich verringerten Zwischenabschnitt 55 übergeht, an den sich der Spitzenabschnitt 57, 58 anschließt. Wie Fig. 7C veranschaulicht, geht der länglich ausgebildete Zwischenabschnitt 55 in einen sich konusförmig verjüngenden Abschnitt 57 über, an den sich eine zylinderförmig ausgebildete Spitze 58 mit gegenüber dem Zwischenabschnitt 55 reduziertem Durchmesser anschließt. Der reduzierte Durchmesser der Spitze 58 ist im erfindungsgemäßen Prägeverfahren dem herzustellenden Drosselquerschnitt in der Kanalbohrung 24 des Ventilstücks 8 zugeordnet, während die axiale Länge der zylinderförmig ausgebildeten Spitze 58 im wesentlichen die Drossellänge im Kanal 24 des Ventilstücks 8 definiert. Der sich zur zylindrischen Spitze 58 hin konusförmig verjüngende Abschnitt 57 dient dazu, den Innenquerschnitt der im Ventilstück 8 zu erzeugenden Drossel bzw. Drosselstelle in abströmseitiger Richtung radial etwas aufzuweiten, um an dieser Stelle die Strömung eines bei bestimmungsgemäßem Betrieb des Ventilstücks 8 die Drossel durchströmenden Mediums wieder expandieren zu lassen.

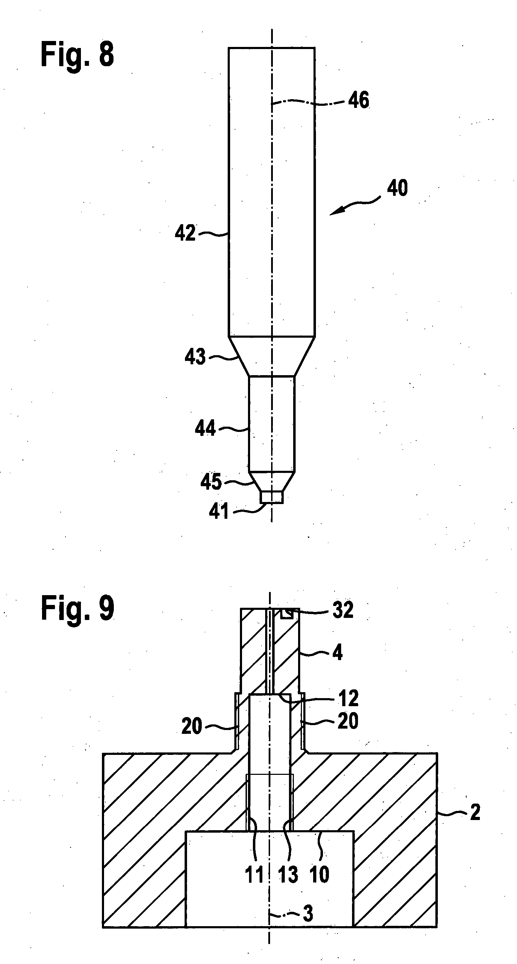

Fig. 8 zeigt die Topographie des Prägestempels 40. Ein länglicher Schaft 42, der zum Einspannen in die nicht dargestellte Kraft- und Wegsteuerungseinrichtung vorgesehen ist, geht über einen sich konusförmig verjüngenden Bereich 43 in einen durchmesserkleineren Abschnitt 44 über, wobei der Abschnitt 44 zum Eintauchen in die Führungsbohrung 9 des Ventilstücks 8 vorgesehen ist. Auf den länglichen Abschnitt 44 folgt ein weiterer sich konusförmig verjüngender Bereich 45, welcher in einen kurzen zylinderförmig ausgebildeten Prägekopf 41 mit reduziertem Durchmesser übergeht. Dabei dient der Prägekopf 41 beim Prägevorgang dazu, das Material am Boden 29 der Führungsbohrung 9 so zu verformen, dass sich eine den Prägeweg definierende Vertiefung 22 bildet. Diese Vertiefung wird in einem folgenden Bearbeitungsschritt nachgearbeitet. Über diesen spanabhebenden Prozess wird die endgültige Drossellänge eingestellt.

Fig. 9 zeigt den Grundkörper 2 der Prägeeinrichtung 1, an dem einstückig der Anschlussstutzen 4 ausgebildet ist. Am Halsansatz des Anschlussstutzens 4 ist an seinem Außenumfang ein Gewindegang 20 ausgebildet, der zur Aufnahme der Rändelmutter 25 vorgesehen ist.

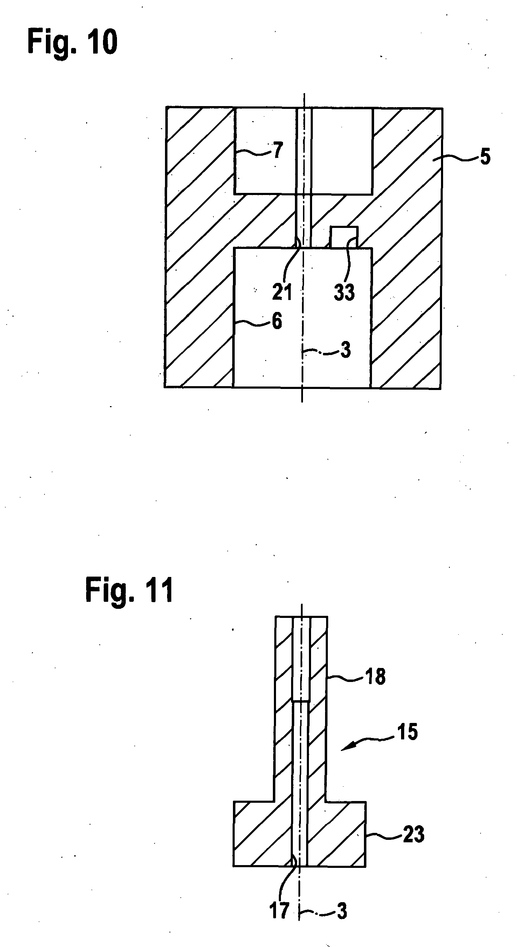

Fig. 10 zeigt die Aufnahmehülse 5 mit der unteren Aufnahmebohrung 6 zur Ankopplung an den halsförmigen Anschlussstutzen 4 und der oberen Aufnahmebohrung 7 zur Aufnahme eines zu prägenden Ventilstücks 8.

Fig. 11 zeigt den Federsitz 15, dessen längsaxial verlaufende Durchgangsbohrung 17 bei bestimmungsgemäßem Einbau in die Prägeeinrichtung 1 zur Lagerung des Gegenstempels 50 vorgesehen ist. Eine zwischen dem Kragen 23 des Federsitzes 15 und der Absatzstufe 12 der Stufenbohrung 11 wirkende Druckfeder 16 dient dazu, den Kopf 51 des Gegenstempels gegen die Kugeldruckschraube 19 zu pressen.

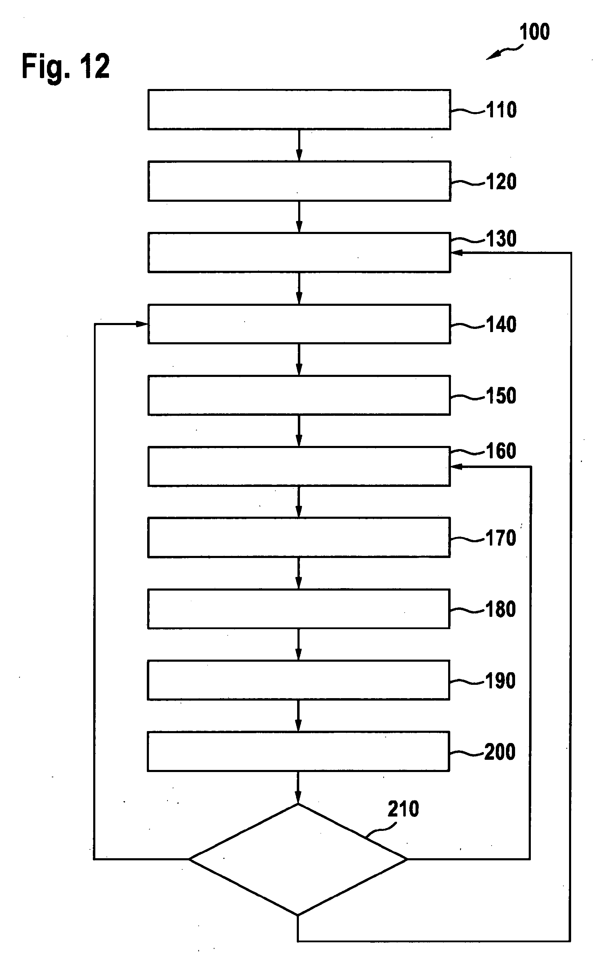

Fig. 12 zeigt ein Flussdiagramm 100 mit den wesentlichen Verfahrensschritten des erfindungsgemäßen Prägeverfahrens. Dabei wird in einem ersten Schritt 110 die Prägeeinrichtung 1 zunächst in einer Justageprozedur konzentrisch bzw. koaxial zu dem in der nicht dargestellten Kraft- und Wegsteuerungseinrichtung eingespannten Prägestempel 40 ausgerichtet, ohne dass ein Ventilstück in die Aufnahmehülse 4 eingesetzt ist. Die Justage erfolgt dabei so, dass die Längsmittelachse 3 der Prägeeinrichtung 1 und die Längsmittelachse 46 des Prägestempels 40 koaxial zueinander angeordnet werden und der Prägekopf 41 des Prägestempels 40 der oberen Aufnahmebohrung 7 der auf dem Anschlussstutzen 4 der Prägeeinrichtung 1 aufsitzenden Aufnahmehülse 5 zugewandt ist. Danach wird in einem weiteren Justageschritt 120 der Prägeweg 22 eingestellt, indem nach zentriertem Einsetzen eines Ventilstücks 8 in die obere Aufnahmebohrung 7 der Aufnahmehülse 4 der Prägestempel 40 entlang der Längsmittelachse 3 der Prägeeinrichtung 1 in die Führungsbohrung 9 des Ventilstücks 8 eingetaucht bzw. eingeführt wird, bis der Prägekopf 41 mit einer vorbestimmten Antastkraft mit dem Boden 29 der Führungsbohrung 9 in Kontakt kommt. Die Antastkraft beträgt im Ausführungsbeispiel 200 N. Diese Stellung dient zur Festlegung einer Start- bzw. Nullposition für die Einstellung des Prägewegs. Aus dieser Startposition wird der Prägekopf 41 nach Maßgabe einer voreingestellten Prägekraft in den Boden 29 der Führungsbohrung 9 hinein bewegt, wobei der Prägekopf 41 das Material im Boden 29 und zwar im Bereich des Kanals 24 plastisch verformt bzw. staucht. Durch diese plastische Verformung wird, wie insbesondere Fig. 5 veranschaulicht, eine Vertiefung 22 im Boden 29 ausgebildet, welche als Prägetiefe den Prägeweg, d.h. den vom Prägestempel 40 während der plastischen Verformung zurückgelegten Weg definiert. Durch die plastische Verformung kommt es nicht nur zur Ausformung der Vertiefung 22, wobei die Länge des durch den Boden 29 verlaufenden Kanals 24 entsprechend verkürzt wird, sondern auch zu einer Querschnittsverengung 34 des Kanals 24 im an die Vertiefung 22 angrenzenden Bereich des Kanals 24; an den querschnittsverengten Abschnitt 34 des Kanals 24 schließt sich in axialer Richtung ein sich kegelförmig erweiternder Kanalabschnitt 14 an, der mit zunehmendem Axialabstand von der durch Stauchung geformten Vertiefung 22 in den ursprünglichen Kanalbohrungsverlauf mit konstantem und demgegenüber größerem Durchmesser übergeht. Der axiale Abstand des kegelförmigen Kanalabschnitts 14 von dem Boden 29 der Führungsbohrung 9 des Ventilstücks 8 wird als Kegeltiefe 36 bezeichnet und ist ein Verfahrensparameter zur Einstellung des Prägewegs 22. Der erforderliche Prägeweg, um eine bestimmte Kegeltiefe 36 erreichen, ist abhängig von mehreren Faktoren, zu denen die ausgeübte Prägekraft, die Härte des Ventilstücks und der Durchmesser der Kanalbohrung 24 gehören. Es können für diesen Justageschritt mehrere Versuche erforderlich sein, um den optimalen Prägeweg zu bestimmen, wobei für jeden Prägevorgang gemäß Schritt 120 ein neues, ungeprägtes Ventilstück in die Prägeeinrichtung 1 einzusetzen ist.

In dem darauf folgenden Schritt 130 wird der Gegenstempel 50 in die Prägeeinrichtung 1 und die Kanalbohrung 24 eingebaut. In dem anschließenden Justageschritt 140 wird, wie insbesondere Fig. 6 veranschaulicht, die axiale Höhe des Gegenstempels 50, d.h. das Maß, mit welchem der Spitzenabschnitt 57, 58 des Gegenstempels 50 aus der Durchgangsbohrung 21 in die obere Aufnahmebohrung 7 der Aufnahmehülse 5 hineinragt, eingestellt. Dazu wird durch Drehen der Kugelschraube 19, auf welcher der Kopf 51 des Gegenstempels 50 aufsitzt, deren axiale Stellung in der Stufenbohrung 11 verändert, so dass die relative Axialstellung des Gegenstempels 50 innerhalb der Prägeeinrichtung 1 und damit das erforderliche Maß für die axiale Höhe bzw. den axialen Überstand der Gegenstempelspitze 57, 58 in der oberen Aufnahmebohrung 7 der Aufnahmehülse 5 in Bezug auf den Boden 35 einstellbar ist. In einem weiteren Verfahrensschritt 150 wird die Rändelmutter 25, welche den Anschlussstutzen 4 umgreift, in ihre untere Anschlagstellung am Halsansatz des Anschlussstutzens 4 gebracht. Danach wird in Schritt 160 ein ungeprägtes Ventilstück 8 in die Aufnahmehülse 5 der Prägeeinrichtung 1 zentriert eingesetzt. Im eingebauten Zustand ragt die Spitze 57, 58 des Gegenstempels 50 in den Kanal 24 des Ventilstücks 8 so hinein, dass die mit der Kontur versehene Spitze an der projektierten Drosselstelle innerhalb des Kanals 24 liegt. In dem anschließenden Verfahrensschritt 170 erfolgt der eigentliche Prägevorgang des Ventilstücks 8. Zunächst erfolgt das axiale Eintauchen des Prägestempels 40 in die Führungsbohrung des Ventilstücks 8 mittels der Kraft- und Wegsteuerungseinrichtung, bis das Ventilstück 8 mit der voreingestellten Antastkraft durch Kontakt zwischen dem Prägekopf 41 und dem Boden 29 der Führungsbohrung 9 detektiert wird; die Kraft- und Wegsteuerungseinrichtung weist dazu im Ausführungsbeispiel einen Kraftaufnehmer im Kraftbereich von 0 - 20 kN bei einer Messwerterfassungsrate von min. 500 Hz auf, wobei die Antastkraft auf 200 N eingestellt ist. Die Stellung, in welcher der Kontakt erfolgt, wird als Start- bzw. Nullposition festgelegt. Ausgehend von dieser Startposition wird dann im eigentlichen Prägevorgang mit einer gegenüber der Antastkraft höher voreingestellten Prägekraft der im Verfahrensschritt 120 eingestellte Prägeweg mit einer vorbestimmten Geschwindigkeit, die im Ausführungsbeispiel 50 mm/min beträgt, durchfahren. Durch plastische Verformung wird, wie insbesondere Fig. 3 veranschaulicht, die Vertiefung 22 im Boden 29 ausgebildet, wobei die Länge des.Kanals 24 im Bereich des Bodens 29 entsprechend schrumpft; gleichzeitig wird die Drosselstelle im an die Vertiefung 22 angrenzenden Bereich des Kanals 24 ausgebildet, indem sich das durch die plastische Verformung gestauchte Material an die in den Kanal 24 im Bereich der projektierten Drossel bzw. Drosselstelle, d.h. im Bereich der Querschnittsverengung 34 des Kanals 24, hineinragende konturierte Spitze 57, 58 des Gegenstempels 50 anlegt. Der Spitzenabschnitt 57, 58 des Gegenstempels 50 wird dabei im Ausführungsbeispiel mit seinem zylindrischen Spitzenbereich 58 und dem darunter angeordneten kegelstumpfförmigen Spitzenbereich 57 in dem querschnittsverengten Bereich 34 des Kanals 24 abgeformt bzw. abgebildet. Die dadurch im querschnittsverengten Bereich 34 des Kanals 24 erzeugte Drossel weist als Prägeabdruck die Konturgeometrie des Spitzenabschnitts 57, 58 des Gegenstempels auf. Die Prägetiefe ist so bemessen, dass die Spitze 58 des Gegenstempels und der Prägekopf 41 des Prägestempels axial beabstandet zueinander bleiben.

Nach dem Prägevorgang in Schritt 170 erfolgt danach in dem Schritt 180 das Lösen des Ventilstücks 8 vom Gegenstempel 50, indem der Prägestempel 40 mittels der Kraft- und Wegsteuerungseinrichtung wieder in seine Ausgangsstellung zurückgefahren und die Rändelmutter 25 aus ihrer unteren Anschlagstellung in ihre obere Anschlagstellung hochgedreht wird, um das Ventilstück 8 zu entnehmen und einer Nachbearbeitung wie einer durch Nitrieren ausgestalteten Aushärtungsprozedur und einem daran anschließenden hydroerosiven Verrunden zu unterwerfen. In zwei weiteren Verfahrensschritten wird in dem Schritt 190 die Rändelmutter 25 wieder in ihre untere Anschlagstellung gedreht, um danach in dem Schritt 200 die axiale Höhe des Gegenstempels 50, d.h. den axialen Überstand 37 in der oberen Aufnahmebohrung 7 der Aufnahmehülse 5 zu vermessen. Ergibt in einem daran anschließenden Vergleichsschritt 210 die Messung, dass die gemessene Höhe des Gegenstempels 50 geringer ist als ein vorbestimmter Grenzwert, so wird der Gegenstempel 50 ausgetauscht und das Verfahren beginnt mit Schritt 130 von neuem, da in diesem Falle die signifikante Abweichung des Messwerts vom vorbestimmten Wert eine Beschädigung bzw. Bruch des Gegenstempels 50 nahelegt. Ergibt die Messung, dass die gemessene Höhe kleiner als ein oberer Grenzwert, jedoch größer als ein unterer Grenzwert ist, so beginnt das Verfahren mit Schritt 140, d.h. mit Einstellung der axialen Höhe des Gegenstempels, von neuem; ergibt die Messung, dass die gemessene Höhe einem vorbestimmten Sollwert entspricht, so kann das Verfahren mit Prägen eines neuen Ventilstücks fortgesetzt werden, indem der Verfahrensablauf ab dem Schritt 160 mit Einlegen eines neuen ungeprägten Ventilstücks wiederaufgenommen wird.

Zusammenfassend sieht das erfindungsgemäße Verfahren vor, dass nach Ausbilden des Strömungskanals 24 in dem Ventilstück 8 das Prägen der Drossel bzw. Drosselstelle 34 durchgeführt wird, indem Material in der Nähe des Strömungskanals 24 in Richtung der projektierten Drosselstelle 34 plastisch verformt wird und das plastisch verformte Material auf ein in den Strömungskanal 24 an die Position der projektierten Drosselstelle 34 eingebrachtes Formwerkzeug 50, 57, 58 derart einwirkt, dass eine die Drosselstelle 34 definierende Kontur 57, 58 des Formwerkzeugs 50 in dem Strömungskanal 24 ausgebildet wird. Die plastische Verformung erfolgt dabei durch einen mit definierter Kraft bewegten Prägestempel 40, während die Kontur der Drosselstelle 34 durch einen Spitzenabschnitt 57, 58 eines als Formwerkzeug eingesetzten Gegenstempels 50 geformt wird.

## Patentansprüche

1. Verfahren zum Herstellen einer Drossel in einem Strömungskanal (24), welcher in einem Bauteil (8) verläuft und zur Steuerung eines Mediums aus einem Steuerraum dient, mit folgenden Verfahrensschritten:
- Ausbilden des Strömungskanals (24) in dem Bauteil (8),
- Prägen der Drossel (34) in dem Strömungskanal (24), indem Material des Bauteils (8) in der Nähe des Strömungskanals (24) in Richtung der geplanten Drossel plastisch verformt wird und das plastisch verformte Material auf ein in dem Strömungskanal (24) positioniertes Formwerkzeug (50, 57, 58) derart einwirkt, dass eine die Drossel (34) definierende Kontur in dem Strömungskanal (24) geformt wird.

2. Verfahren nach Anspruch 1, bei dem die plastische Verformung des Materials durch einen in einer Führungsbohrung (9) des Bauteils (8) geführten Prägestempel (40) durchgeführt wird, indem der Prägestempel (40) mit definierter Kraft gegen einen Boden (29) der Führungsbohrung (9) bewegt wird, durch den sich der Strömungskanal (24) erstreckt, und das von dem Prägestempel (40) bodenseitig verformte Material sich an das im Strömungskanal (24) am Ort der geplanten Drossel (34) positionierte Formwerkzeug (57, 58) anlegt.

3. Verfahren nach Anspruch 1 oder 2, bei dem als Formwerkzeug ein Gegenstempel (50) verwendet wird, dessen Spitzenabschnitt (57, 58) im Strömungskanal (24) am Ort der geplanten Drossel derart positioniert wird, dass das von dem Prägestempel (40) bodenseitig plastisch verformte Material die Kontur des Spitzenabschnitts (57, 58) in dem Strömungskanal (24) am Ort der geplanten Drossel (34) abformt.

4. Verfahren nach Anspruch 3, bei dem zum Abformen der Kontur der Spitzenabschnitt (57, 58) des Gegenstempels (50) endseitig eine zylinderförmige Spitze (58) und einen vorgeordneten, sich zur Spitze (58) hin kegelstumpfförmig verjüngenden Übergangsabschnitt (57) aufweist.

5. Verfahren nach einem der Ansprüche 2 bis 4, bei dem zur plastischen Verformung des Materials der Prägestempel (40) derart gesteuert wird, dass die die Verformung bestimmende Bewegungsachse des Prägestempels (40) etwa koaxial zur Längserstreckungsrichtung des Strömungskanals (24) verläuft und die Verformung des Materials des Bauteils (8) durch einen Prägekopf (41) des Prägestempels (40) bis zu einer vorbestimmten Prägetiefe (22) erfolgt, wobei der Prägekopf (41) eine den Steuerraum ausbildende Vertiefung entsprechend der Prägetiefe erzeugt.

6. Verfahren nach einem der Ansprüche 1 bis 5, bei dem das dem Prägevorgang zugrundeliegende plastische Verformen symmetrisch zur Symmetrieachse des Bauteils (8) und des im Bauteil (8) verlaufenden Strömungskanals (24) durchgeführt wird.

7. Verfahren nach einem der Ansprüche 1 bis 6, bei dem das Material des Bauteils (8) durch Stauchen plastisch verformt wird.

8. Verfahren nach einem der Ansprüche 1 bis 7, bei dem der Prägevorgang im Weichzustand des Bauteils (8) durchgeführt wird.

9. Verfahren nach Anspruch 8, bei dem nach dem Prägevorgang ein Aushärten des Bauteils (8) durchgeführt wird.

10. Verfahren nach einem der Ansprüche 1 bis 9, bei dem nach dem Prägevorgang eine Nachbearbeitung der geprägten Drossel des Bauteils (8) durch hydroerosives Verrunden durchgeführt wird.

11. Vorrichtung zur Durchführung des Verfahrens nach einem der Ansprüche 1 bis 10, wobei die Vorrichtung (1) einen Kopfteil (5) zur Aufnahme eines Bauteils (8) aufweist, ein in einer Aufnahmebohrung (11) der Vorrichtung (1) aufgenommenes Formwerkzeug (50) axial derart verstellbar ist, dass dessen formgebender Abschnitt (57, 57) in den zur Ausbildung einer Drossel vorgesehenen Bereich des Strömungskanals (24) des Bauteils (8) einführbar ist, und die Vorrichtung (1) eine steuerbare Einrichtung aufweist, um einen Prägestempel (40) in Richtung des in dem Kopfteil (5) aufgenommenen Bauteils (8) zu bewegen und bei Kontaktanschlag des Prägestempels an dem Bauteil (8) den Prägestempel gegen das Bauteil (8) mit einstellbarer Prägekraft zu pressen, wobei die Bewegungsachse der Einrichtung etwa koaxial zu einer Führungsbohrung des in dem Kopfteil (5) aufgenommenen Bauteils (8) verläuft.

## Claims

1. Method for producing a throttle in a flow channel (24) which runs in a component (8) and serves to control a medium from a control chamber, comprising the following method steps:
- formation of the flow channel (24) in the component (8),
- stamping of the throttle (34) in the flow channel (24), in that material of the component (8) in the vicinity of the flow channel (24) is plastically deformed in the direction of the planned throttle and the plastically deformed material acts in such a way on a forming tool (50, 57, 58) positioned in the flow channel (24) that a contour which defines the throttle (34) is shaped in the flow channel (24).

2. Method according to Claim 1, in which the plastic deformation of the material is performed by a stamping die (40) guided in a guide bore (9) of the component (8), in that the stamping die (40) is moved with defined force against a base (29) of the guide bore (9), through which base the flow channel (24) extends, and the material which is deformed at the bottom by the stamping die (40) comes to bear against the forming tool (57, 58) positioned in the flow channel (24) at the site of the planned throttle (34).

3. Method according to Claim 1 or 2, in which a counter-die (50), the tip portion (57, 58) of which is positioned in such a way in the flow channel (24) at the site of the planned throttle that the material deformed at the bottom by the stamping die (40) molds the contour of the tip portion (57, 58) in the flow channel (24) at the site of the planned throttle (34), is used as the forming tool.

4. Method according to Claim 3, in which, for the molding of the contour, the tip portion (57, 58) of the counter-die (50) has on the end side a cylindrical tip (58) and an upstream transition portion (57) tapered frustoconically in the direction of the tip (58).

5. Method according to one of Claims 2 to 4, in which, for the plastic deformation of the material, the stamping die (40) is controlled such that that motional axis of the stamping die (40), which determines the deformation, runs roughly coaxially to the direction of longitudinal extent of the flow channel (24) and the deformation of the material of the component (8) is effected by a stamping head (41) of the stamping die (40) up to a predetermined stamping depth (22), wherein the stamping head (41) produces a depression, forming the control chamber, in accordance with the stamping depth.

6. Method according to one of Claims 1 to 5, in which the plastic deformation on which the stamping operation is founded is performed symmetrically to the axis of symmetry of the component (8) and of the flow channel (24) running in the component (8).

7. Method according to one of Claims 1 to 6, in which the material of the component (8) is plastically deformed by swaging.

8. Method according to one of Claims 1 to 7, in which the stamping operation is performed in the soft state of the component (8).

9. Method according to Claim 8, in which, after the stamping operation, a hardening of the component (8) is performed.

10. Method according to one of Claims 1 to 9, in which, after the stamping operation, reworking of the stamped throttle of the component (8) by hydroerosive rounding is performed.

11. Apparatus for implementing the method according to one of Claims 1 to 10, wherein the apparatus (1) has a head part (5) for the reception of a component (8), a forming tool (50) accommodated in a receiving bore (11) of the apparatus (1) is axially adjustable such that its shaping portion (57, 58) can be introduced into that region of the flow channel (24) of the component (8) which is designed for the formation of a throttle, and the apparatus (1) has a controllable device in order to move a stamping die (40) in the direction of the component (8) accommodated in the head part (5) and, in the contact abutment of the stamping die against the component (8), to press the stamping die against the component (8) with adjustable pressing force, wherein the motional axis of the device runs roughly coaxially to a guide bore of the component (8) accommodated in the head part (5).

## Revendications

1. Procédé de fabrication d'un étranglement dans un canal d'écoulement (24) qui s'étend dans un composant (8) et qui sert à la commande d'un milieu provenant d'un espace de commande, comprenant les étapes de procédé suivantes :
- réalisation du canal d'écoulement (24) dans le composant (8),
- marquage de l'étranglement (34) dans le canal d'écoulement (24), par déformation plastique de matériau du composant (8) à proximité du canal d'écoulement (24) dans la direction de l'étranglement prévu et par action du matériau déformé plastiquement sur un outil de formage (50, 57, 58) positionné dans le canal d'écoulement (24) de telle sorte qu'un contour définissant l'étranglement (34) soit formé dans le canal d'écoulement (24).

2. Procédé selon la revendication 1, dans lequel la déformation plastique du matériau est réalisée par un poinçon de marquage (40) guidé dans un alésage de guidage (9) du composant (8), en déplaçant le poinçon de marquage (40) avec une force définie contre un fond (29) de l'alésage de guidage (9) à travers lequel s'étend le canal d'écoulement (24) et par application du matériau déformé du côté du fond par le poinçon de marquage (40) contre l'outil de formage (57, 58) positionné dans le canal d'écoulement (24) à l'endroit de l'étranglement prévu (34).

3. Procédé selon la revendication 1 ou 2, dans lequel on utilise en tant qu'outil de formage un poinçon conjugué (50) dont la portion de pointe (57, 58) est positionnée dans le canal d'écoulement (24) à l'endroit de l'étranglement prévu de telle sorte que le matériau déformé plastiquement du côté du fond par le poinçon de marquage (40) modèle le contour de la portion de pointe (57, 58) dans le canal d'écoulement (24) à l'endroit de l'étranglement prévu (34).

4. Procédé selon la revendication 3, dans lequel, pour le modelage du contour, la portion de pointe (57, 58) du poinçon conjugué (50) présente, du côté de l'extrémité, une pointe cylindrique (58) et une portion de transition (57) placée en amont, se rétrécissant sous forme tronconique vers la pointe (58).

5. Procédé selon l'une quelconque des revendications 2 à 4, dans lequel, pour la déformation plastique du matériau, le poinçon de marquage (40) est commandé de telle sorte que l'axe de déplacement du poinçon de marquage (40) déterminant la déformation s'étende approximativement coaxialement à la direction d'étendue longitudinale du canal d'écoulement (24) et que la déformation du matériau du composant (8) s'effectue jusqu'à une profondeur de marquage prédéterminée (22) par une tête de marquage (41) du poinçon de marquage (40), la tête de marquage (41) produisant un renfoncement correspondant à la profondeur de marquage constituant l'espace de commande.

6. Procédé selon l'une quelconque des revendications 1 à 5, dans lequel la déformation plastique à la base de l'opération de marquage est effectuée symétriquement par rapport à l'axe de symétrie du composant (8) et du canal d'écoulement (24) s'étendant dans le composant (8).

7. Procédé selon l'une quelconque des revendications 1 à 6, dans lequel le matériau du composant (8) est déformé plastiquement par refoulement.

8. Procédé selon l'une quelconque des revendications 1 à 7, dans lequel l'opération de marquage est effectuée à l'état ramolli du composant (8).

9. Procédé selon la revendication 8, dans lequel, après l'opération de marquage, on effectue un durcissement du composant (8).

10. Procédé selon l'une quelconque des revendications 1 à 9, dans lequel, après l'opération de marquage, on effectue un post-traitement de l'étranglement marqué du composant (8) par arrondissement par hydro-érosion.

11. Dispositif pour mettre en oeuvre le procédé selon l'une quelconque des revendications 1 à 10, dans lequel le dispositif (1) présente une partie de tête (5) pour recevoir un composant (8), un outil de formage (50) reçu dans un alésage de réception (11) du dispositif (1) peut être déplacé axialement de telle sorte que sa portion générant la forme (57, 58) puisse être introduite dans la région du canal d'écoulement (24) du composant (8) prévue pour réaliser un étranglement, et le dispositif (1) présente un dispositif commandable, afin de déplacer un poinçon de marquage (40) dans la direction du composant (8) reçu dans la partie de tête (5) et, en cas de butée de contact du poinçon de marquage contre le composant (8), afin de presser le poinçon de marquage contre le composant (8) avec une force de marquage ajustable, l'axe de déplacement du dispositif s'étendant approximativement coaxialement à un alésage de guidage du composant (8) reçu dans la partie de tête (5).
